# EUROPÄISCHE PATENTSCHRIFT

(11) **EP 1 859 298 B1**
(45) Veröffentlichungstag und Bekanntmachung des Hinweises auf die Patenterteilung: **03.10.2012**
(21) Anmeldenummer: 06708633.0
(22) Anmeldetag: 03.03.2006
(51) Int. Cl.: G01S 17/42

(54) **VERFAHREN UND SYSTEM ZUR BESTIMMUNG VON POSITION UND ORIENTIERUNG EINES OBJEKTS**
METHOD AND SYSTEM FOR DETERMINING POSITION AND ORIENTATION OF AN OBJECT
PROCÉDÉ ET DISPOSITIF POUR DÉTERMINER LA POSITION ET L'ORIENTATION D'UN OBJET

(30) Priorität: 17.03.2005 EP 05102098
(43) Veröffentlichungstag der Anmeldung: 28.11.2007
(73) Patentinhaber: Leica Geosystems AG, 9435 Heerbrugg (CH)
(72) Erfinder: AEBISCHER, Beat, CH-9435 Heerbrugg (CH); BRAUNECKER, Bernhard, CH-9445 Rebstein (CH); KIPFER, Peter, CH-9437 Marbach (CH)
(74) Vertreter: Kaminski Harmann
(86) Internationale Anmeldenummer: PCT/EP2006/060444
(87) Internationale Veröffentlichungsnummer: WO 2006/097408

(56) Entgegenhaltungen:
- WO-A-98/07012
- GB-A- 1 027 457
- GB-A- 2 281 833
- US-A- 4 714 339
- US-A1- 2003 043 362
- US-A1- 2004 196 451

## Beschreibung

Die Erfindung betrifft ein Lagebestimmungsverfahren nach dem Oberbegriff des Anspruchs 1, eine bewegbare Einheit nach dem Oberbegriff des Anspruchs 9, sowie ein Lagebestimmungssystem und ein Computerprogrammprodukt.

In vielen geodätischen Anwendungen werden Verfahren und Systeme zur Lagebestimmung, d.h. zur Positions- und/oder Orientierungsbestimmung, eines verwendeten Instrumentes verwendet. Von einer mit einem solchen System bestimmten Position aus werden dann meist weitere Messungen durchgeführt, die mit der Position verknüpft sind und zumeist auch die Kenntnis der Orientierung des Messgerätes im Raum benötigen. Grundsätzlich kann dabei auch aus der Positionsbestimmung von zwei oder mehr Punkten auf die Orientierung des Instruments geschlossen werden. Für messtechnische Anwendungen sind zur eindeutigen Festlegung der absoluten Lage im Raum die 6 Freiheitsgrade des handhaltbaren Messgerätes, zumindest aber die Position und damit 3 Freiheitsgrade, zu bestimmen. Die Problemstellung beinhaltet somit die Bestimmung von Position und Orientierung als zwei grundsätzlich getrennt lösbare Aufgaben, die aber für viele Anwendungen verknüpft durchgeführt werden müssen. Im Regelfall werden somit sowohl Position als auch Orientierung eines zumeist handhaltbaren Messgerätes benötigt.

Verfahren und Systeme zum Bestimmen der Lage von Objekten werden dabei in vielerlei Anwendungen benötigt. So werden beispielsweise in geodätischen Anwendungen oft Lageinformationen eines Messgeräts verwendet, z. B. beim Einmessen des Messgeräts in ein Gelände-Koordinatensystem.

Von einem solchem Messgerät aus werden dann meist weitere Messungen durchgeführt und mit der Lageinformation verknüpft. Ein anderes Einsatzgebiet ist die automatische Maschinensteuerung, wo die Lage von bewegten Fahrzeugen als Grundlage einer Steuerung bekannt sein muss. Ein Lagebestimmungssystem zum Feststellen der Lage bewegter Objekte wird beispielsweise auch beim Markieren von Sportfeldern benötigt.

Bekannte Verfahren bzw. Systeme zur Positionsbestimmung sind beispielsweise globale Positionsbestimmungssysteme, wie GPS. Mit einem GPS-Empfänger auf einem Objekt kann - ungestörten Satelliten-Empfang vorausgesetzt, was z.B. in Strassenschluchten, Sportstadien, Baugruben oder im Tagebau nicht immer gewährleistet ist - die Position des Objekts bestimmt werden. Zum Feststellen der Orientierung des Objekts wird ein zusätzlicher Orientierungsmesser benötigt. Die Genauigkeit der aus GPS-Signalen ermittelten Positionsdaten ist aber - insbesondere bezüglich der Höhe eines Objekts - beschränkt und für viele Anwendungen ungenügend. Auch sind die Systeme für bewegte Objekte zunehmend ungenau bzw. erfordern einen erhöhten Aufwand in der Messung.

Eine andere, häufig verwendete Methode ist die Positionsbestimmung mit Tachymetern oder Totalstationen. Insbesondere finden sich auch zur Positionsbestimmung bewegter Objekte im Stand der Technik vielerlei Ausführungsformen von solchen Systemen zur automatischen Zielverfolgung und Vermessung bewegter Objekte. Im Regelfall erfolgt hierbei nur eine Positionsbestimmung des sich unabhängig von der Totalstation bewegenden Objekts. Zur Orientierungsbestimmung des Objekts können weitere Messungen auf dem Objekt, z.B. mit Neigungssensoren und einem Kompass, durchgeführt werden.

Andere Ansätze für lokale Positionierungssysteme beruhen auf passiven Punkten bekannter Position. So ist beispielsweise aus der PCT/EP2004/010571 ein System zur Bestimmung der Aktualposition eines Messgerätes bekannt, bei dem mindestens zwei in einem mit einem Laserstrahl abgetasteten Raumsegment gelegene Referenzpunkte erfasst und hinsichtlich ihrer Entfernung und ihrem Neigungswinkel vermessen werden. Aus den bekannten Positionen dieser detektierbar gestalteten Referenzpunkte und den zugeordneten Entfernungen und Neigungswinkel kann die Aktualposition des Messgerätes abgeleitet werden. Das Erfassen, Verfolgen und Vermessen der Referenzpunkte wird durch das Messgerät automatisiert vorgenommen, wobei das Messgerät und den Referenzpunkten zugeordnete, speziell ausgebildete Elemente ein lokales Positionierungs- und/oder Orientierungsmesssystem bilden. Bei diesem System müssen jedoch die Referenzpunkte aktiv mit einem Laserstrahl abgetastet und beleuchtet werden, so dass die Empfangskomponente im Messgerät sehr komplex ausgelegt werden muss.

Diese Art der Positionsbestimmung setzt Referenzpunkte voraus, die entweder bereitgestellt oder bereits vorhanden sein müssen. Diese Voraussetzung ist jedoch oftmals im freien Gelände - wie z.B. auf Sportfeldern oder -plätzen - nicht gegeben. Das Aufstellen von z.B. Reflektorstäben als Referenzpunkte und der Transport derselben gestaltet das Verfahren aufwendig.

Ein anderer Ansatz ist es, zur Bestimmung der Lage einer bewegbaren Einheit in einem ersten Schritt eine Abtasteinheit, vorzugsweise ein Laser-Scanner, an einem für eine Messung zur Einheit geeigneten Standort zu positionieren, wobei dieser Standort bekannt sein kann oder vorgängig vermessen wird, so dass die Position der Abtasteinheit bestimmt ist. Eine Vermessung der Position der Abtasteinheit kann mit allgemein bekannten Verfahren der Vermessungstechnik erfolgen, so z.B. mittels eines Total Positioning Systems oder eines globalen Positionierungssystems. Ebenso kann die Abtasteinheit aber auch relativ zu einem vorgegebenen Ausgangspunkt plaziert und vermessen werden. Eine Messung vermittels der Abtasteinheit erfolgt damit von einer Position bekannter lokaler oder globaler Ortskoordinaten aus.

Eine gattungsgemässe Abtasteinheit verfügt über eine Strahlungsquelle zur Emission eines Laserstrahls oder Laserpulses, mit welchem Laserstrahl ein Raumwinkelbereich abgetastet wird. Je nach konkret gewählter Realisierung einer Ausführungsform können verschiedene - im Stand der Technik bekannte - Abtastbewegungen für das Raumsegment gewählt werden.

Im erfassten Raumsegment befindliche Messziele reflektieren die abtastende Strahlung teilweise zur Abtasteinheit zurück, von welcher die reflektierte Strahlung empfangen und - bezüglich der Entfernung zum Messziel und des Horizontal- und/oder Vertikalwinkels zwischen einer Achse der Abtasteinheit und dem Messziel - ausgewertet wird. Die Messziele sind dabei zumeist anhand ihres Reflexionsvermögens vom Hintergrund unterscheidbar, so dass sie bereits aus der Schwankung in der Intensität der reflektierten Strahlung erkannt werden. Ergänzend können auch weitere Massnahmen zur Zielerkennung oder zur automatisierten Vermessung Verwendung finden. Zu einem beim Abtasten des Raumwinkelbereichs detektierten Messziel wird vermittels der Abtasteinheit über die vom Messziel reflektierte Strahlung, vorzugsweise nach dem Phasenmessprinzip oder dem Prinzip der Pulslaufzeitmessung, die Entfernung gemessen. Zusammen mit der Winkelinformation der emittierten Strahlung, lässt sich dann die Raumposition der jeweiligen Auftreffortes im Verhältnis zur Abtasteinheit bestimmen.

Die zu bestimmenden Winkel hängen hierbei von der konkreten Situation und den vorgegebenen Zwangsbedingungen ab. Erfolgt die Messung beispielsweise nur in einer Ebene, so genügt die Bestimmung des in dieser Ebene liegenden Winkels oder Winkelanteils. Im allgemeinen Fall werden für eine Positionsbestimmung jedoch eine Entfernung und zwei Winkel benötigt.

Die Positionsinformation über ein Objekt als Messziel bzw. ein mit einem reflektiven Messziel ausgestattetes Objekt wird also erhalten, indem ein Laserstrahl einen Raumbereich überstreicht und im Raumbereich gelegene Messziele vermittels der Abtasteinheit erfasst, identifiziert und vermessen werden. Empfängt die Abtasteinheit beim Scannen eines Raumsegments keinen einem Messziel zuordenbaren Strahlungsreflex, so wird ein nächstes Raumsegment gescannt. Diese Zielsuche kann z.B. über eine automatische Zielsucheinrichtung erfolgen.

Die Abtasteinheit kann ein oder mehrere Messziele erfassen, erfindungsgemäss ist das Messziel der Abtasteinheit ein Empfänger, bzw. eine bewegbare Einheit - ein Objekt - mit einem Empfänger, welcher so ausgebildet ist, dass er einerseits einen von der Abtasteinheit emittierten Laserstrahl empfängt und - zumindest teilweise - zurückreflektiert, und andererseits seine Orientierung relativ zum Laserstrahl, bzw. relativ zur Einfallsrichtung des Laserstrahls, bestimmt. Dies kann auf unterschiedliche Art und Weise erfolgen.

Die Anordnung des gattungsgemässen Lagebestimmungssystems mit Abtasteinheit, Empfänger und Steuereinheit wird zumeist so gewählt, dass die Rotationsachse der Empfangsoptik vertikal und der scannende Laserstrahl der Abtasteinheit horizontal in Bezug auf eine Referenzebene, z.B. einen Untergrund, sind. Vorzugsweise richtet sich nach einer ersten Justierung die Empfangsoptik automatisch gegen die Abtasteinheit aus. Die Zielsuche der Abtasteinheit verläuft ebenfalls automatisch. Beispielsweise kann auch ein Grobsuchlauf zur Erfassung der Empfangsoptik verwendet werden, der eine zur Erfassung der Empfangsoptik geeignete Komponente der Abtasteinheit ausrichtet, so dass keine Interaktion mit einem Benutzer erforderlich ist.

Die Recheneinheit kann als externe Komponente des Systems z.B. von einem Benutzer bedient werden. Ebenso sind aber Ausführungsformen mit in die Abtasteinheit oder den Empfänger integrierter Recheneinheit möglich. Das System wird dann z.B. automatisch von der Abtasteinheit oder dem Empfänger aus gesteuert.

Ein gattungsgemässer Empfänger wird im allgemeinen in definierter Weise mit einer bewegbaren Einheit mittel- oder unmittelbar verbunden und somit die Lage der Einheit bestimmbar gestaltet.

Die zu vermessende Einheit kann beispielsweise eine Baumaschine sein. Es kann auch ein Vermessungsinstrument sein, dessen Position und Orientierung bestimmt werden soll. Ein weiteres Einsatzgebiet liegt in der Anwendung für alle Arten von Markierungsarbeiten. Das können sowohl Markierungen für Bauarbeiten sein, als auch auf Sportplätzen. Dafür wird die Empfangsvorrichtung z.B. auf einem fahrbaren Markierungsgerät zum Zeichnen oder Sprühen von Linien oder zweidimensionalen Zeichnungen, wie Wappen, Symbolen oder Texten, angebracht.

Durch die Orientierungsbestimmung relativ zur Strahlachse kann der Empfänger bzw. die bewegbare Einheit gesteuert werden, indem die Strahlung mit ihrer Emissionsachse gleichsam als Leitstrahl bewegt wird. Hierzu wird die Steuereinheit so programmiert oder hardwareseitig ausgelegt, dass die Ablage der Empfängerachse von der Emissionsachse konstant gehalten oder verringert bzw. minimiert wird. Somit resultiert jede Veränderung des Leitstrahls in einer Korrektur der Lage des Empfängers bzw. der bewegbaren Einheit. In einer kontinuierlichen Abfolge solcher Korrekturen folgt die bewegbare Einheit dem bewegten Leitstrahl.

Durch die Führung des Leitstrahls gemäss einem vorgegebenen Muster kann die Einheit zielgenau bewegt werden, so dass beispielsweise mit Bearbeitungskomponenten die Oberfläche verändert werden kann. So können beispielsweise beliebig geformte Figuren als Vektorgraphik auf der Erdoberfläche markiert werden. Dies erlaubt beispielsweise die Erstellung von komplexen Vereinszeichen auf Sportfeldern.

Aus der US 2003/043362 ist ein sechsdimensionales Laser-Zielverfolgungssystem nach obigem Prinzip bekannt. Ein Tracker als Abtasteinheit misst die Polarkoordinaten des Ziels und das Ziel bzw. der Empfänger einer bewegbaren Einheit bestimmt seine Drehwinkel bezüglich eines mathematischen Dreibeins, welches durch die Strahlrichtung und die Polarisationsrichtungen gegeben ist. Dies setzt voraus, dass der Tracker- bzw. Abtaststrahl einen definierten Punkt des Empfängers auf der bewegbaren Einheit treffen muss; jede Fehlzielung führt direkt zu einem Fehler der Polarkoordinaten der bewegbaren Einheit als zu vermessendes Ziel. Deshalb muss der Sender der Abtasteinheit mit seinem Laserstrahl die Eintrittspupille der Empfängeroptik genau treffen. Ist diese klein oder weit weg, muss der Sender im Sinne eines "Fine Pointing Link" sehr genau anzielen, um die optische Verbindung aufzubauen und zu halten, aber auch um diese nach einer Störung wiederherzustellen. Dies bereitet insbesondere Probleme, wenn die Verbindungskomponenten Sender, Medium oder Empfänger nicht stabil zueinander sind, sei es durch Vibrationen, Flimmern der Luft, oder wenn ruckartige Bewegungen der Komponenten die optische Verbindung unterbrechen, z.B. bei Bewegungen über unebenen Grund. Hierbei nehmen die Probleme bzw. die Ausfallwahrscheinlichkeit mit grösserer Entfernung zu, so dass auch eine Begrenzung hinsichtlich der maximal realisierbaren Nutzentfernung existiert. Zudem werden zur Erzielung der benötigten Genauigkeiten erhöhte Anforderungen an die Systemkomponenten gestellt, insbesondere an die zur Ausrichtung und Nachführung verwendete Mechanik, die eine präzise Ausrichtung und verzugslose Nachführung ermöglichen muss.

Eine Aufgabe der vorliegenden Erfindung besteht darin, ein Verfahren bzw. ein System zur Bestimmung von Positions- und Orientierungsinformationen bewegbarer Einheiten bereitzustellen, das einen vereinfachten Aufbau und Betrieb erlaubt.

Eine weitere Aufgabe ist es, ein Verfahren bzw. ein System zur Bestimmung von Positions- und Orientierungsinformationen bewegbarer Einheiten bereitzustellen, das eine verbesserte optische Verbindung zwischen Systemkomponenten aufweist.

Eine weitere Aufgabe ist es, ein Verfahren bzw. ein System zur Bestimmung von Positions- und Orientierungsinformationen bewegbarer Einheiten bereitzustellen, das eine vergrösserte Reichweite und/oder Robustheit gegenüber Umwelteinflüssen, wie z.B. Luftturbulenzen oder Bodenunebenheiten, aufweist.

Diese Aufgaben werden erfindungsgemäss durch die Gegenstände der Ansprüche 1, 9 oder 15 bzw. der abhängigen Ansprüche gelöst oder die Lösungen weitergebildet.

Die Erfindung betrifft ein Lagebestimmungsverfahren, eine bewegbare Einheit, eine Abtasteinheit sowie ein Lagebestimmungssystem mit diesen Komponenten. Dabei basiert der Ansatz auf der Positionsbestimmung einer bewegbaren Einheit durch ein abtastendes System, z.B. einen Laserscanner. Die Orientierungsbestimmung der Einheit erfolgt durch eine Messung der Lage eines auf der Einheit angeordneten Empfängers relativ zur Strahlachse der von der Abtasteinheit emittierten Strahlung. Aus der Kenntnis der Lage des Empfängers zur Strahlachse und der Kenntnis der Lage des Empfängers relativ zu einer Trägerkomponente der Einheit kann die Orientierung der Einheit abgeleitet werden. Aus der Positions- und der Orientierungsinformation folgt damit die Kenntnis der Lage im Raum.

Erfindungsgemäss wird das Lagebestimmungssystem bzw. das Lagebestimmungsverfahren so ausgestaltet, dass der Empfänger bzw. die bewegbare Einheit zusätzlich einen Strahlversatz des Laserstrahls gegenüber der Empfängerachse, der auch als Zielfehler interpretiert werden kann, misst. Hierbei werden zwei reelle Parameter *w*¹ und w³, welche die Lage des Auftreffpunktes des Laserstrahls in der Eintrittspupille des Empfängers beschreiben, gemessen. Diese Parameter werden in der Berechnung von Position und Drehlage des Empfängers bzw. der diesen tragenden bewegbaren Einheit berücksichtigt.

Ist die Eintrittspupille relativ zum Querschnitt des Laserstrahls bzw. dessen Auftreffpunkt gross, so kann der Laserstrahl darin im Sinne eines "Coarse Pointing Link" in gewissem Ausmass bewegt werden, ohne dass die optische Verbindung verloren geht. Hierdurch werden die Anforderungen an die Zielgenauigkeit des Trackers bzw. der Abtasteinheit sowie der Empfängernachführung verringert.

Damit ist es möglich, die Verbindung selbst unter ungünstigen Umständen, wie z.B. bei vibrierendem Sender, wo Verfahren des Stands der Technik die Verbindung ständig verlieren würden, diese Verbindung nicht nur zu halten, sondern auch die Eintrittskoordinaten in der Pupille zu bestimmen und zu mitteln, und damit die irrelevanten Vibrationen oder weitere Einflüsse, wie z.B. das Luftflimmern, zu eliminieren. Es ist erfindungsgemäss ebenfalls möglich, damit auch die Refraktion des Übertragungsmediums Luft permanent zu überwachen und zur quantitativen Korrektur zu benutzen.

Durch die erfindungsgemässe Ausgestaltung ergeben sich auch bauliche oder systemtechnische Vorteile. So werden beispielsweise die Spezifikationen für die Abtasteinheit entspannt. Diese kann nun langsamer reagieren, so dass weniger komplexe Motoren oder Steuerungen, sowie ein geringerer Stromverbrauch realisierbar sind. Zudem kann die Genauigkeit erhöht werden und die Häufigkeit, mit der die Abtasteinheit die Verbindung zum Empfänger verliert, wird vermindert. Das ist von Vorteil, wenn sich der Empfänger abrupt bewegt oder wackelt, z.B. weil er auf einem Wagen montiert ist, der auf unebenem Boden, z.B. einem zu markierenden Spielfeld oder einer Baustelle, fährt. Auch atmosphärische Störungen, wie sie insbesondere bei Freilandanwendungen und über längere Distanzen relevant werden, können zu Linkverlust führen, die nun entweder ohnehin vermieden werden oder nach denen das Wiederherstellen der optischen Verbindung überhaupt erst ermöglicht oder zumindest beschleunigt wird.

Der erfindungsgemässe Empfänger kann eine Empfangsoptik, einen optischen Sensor und einen Neigungssensor umfassen, wobei die Empfangsoptik vorzugsweise sowohl zum Empfangen als auch Reflektieren eines Laserstrahls ausgebildet ist - beispielsweise mittels einer Objektivlinse mit spezieller Beschichtung. Der scannende Laserstrahl trifft auf die Empfangsoptik und wird auf den optischen Sensor, z.B. einen Photodetektor oder ein CCD-Array, abgebildet. Anhand der Abbildung auf dem Sensor wird die Einfallsrichtung des Laserstrahls in Bezug zum Sensor - und damit zum Empfänger bzw. zu einer Empfängerachse bestimmt. Mit der Bestimmung der Einfallsrichtung des Laserstrahls relativ zu einer Empfängerachse ist mindestens ein erster Winkel zwischen Abtasteinheit und Empfänger festgelegt, zumeist sind durch eine entsprechende Auslegung des Empfängers aber zwei Winkel bestimmbar. Der fehlende dritte Neigungswinkel ist beispielsweise mittels des Neigungssensors messbar, wobei ein biaxialer Neigungsmesser redundante Information bereitstellt. Diese mit der Positionsinformation der Abtasteinheit verknüpfte Neigungsinformation kann als Lageinformation bezüglich des Empfängers betrachtet werden. Die Lage des Empfängers ist dann z.B. feststellbar, indem die Lageinformation an eine Recheneinheit kommuniziert, und von dieser verarbeitet wird. Die Kommunikation kann z.B. anhand einer Verbindung über Kabel, oder einer kabellosen Verbindung, z.B. einer Funk-, oder Ultraschall-Übertragung, erfolgen. Anhand der Positions- und Orientierungsinformation wird mittels der Recheneinheit die Lage des Empfängers bzw. eines mit demselben in definierter geometrischer Beziehung stehenden Objekts, z.B. eines Fahrzeugs als bewegbarer Einheit, bestimmt. Ein Notebook mit entsprechender Software kann z.B. eine solche Recheneinheit darstellen, die extern mit der Abtasteinheit und dem Empfänger kommunizieren oder beispielsweise in die Abtasteinheit oder den Empfänger integriert sein kann.

Durch eine Ausgestaltung des Empfängers mit einem einer Linse nachgeordnetem Strahlteiler und zwei gegensätzlich defokussierten Detektorkomponenten kann anhand der Bildpunkte auf den beiden Detektorkomponenten parallel zur Einfallsrichtung bzw. dem Einfallswinkel auch der Strahlversatz als Ablage des Auftreffpunktes der Laserstrahlung von der Empfängerachse bestimmt werden.

In der Ausbildung mit Empfangsoptik, optischem Sensor und Neigungssensor bzw. Neigungsindikator als Komponenten ist der Empfänger vorzugsweise als handliches Gerät mit die einzelnen Komponenten enthaltendem Gehäuse ausgebildet. Die Komponenten können aber ebenso als separate Teile den Empfänger bilden. Einen Neigungsindikator kann z.B. auch ein der Optik zugeordneter Polarisationsfilter darstellen, so dass eine Lagebestimmung relativ zur Polarisationsrichtung der emittierten Strahlung erfolgt.

Ein alternativ ausgebildeter Empfänger sieht ein zusätzliches reflektives Element zur verbesserten Vermessung durch die Abtasteinheit vor, sodass die Positionsinformation über eine Messung zu diesem reflektiven Element erhalten wird. Das reflektive Element kann z.B. ein auf der Empfangsoptik selbst oder deren Gehäuse angebrachter Reflektor - z.B. Tripelprismen oder sphärische Reflektoren, bzw. einfach ein reflektiver Bereich - z.B. aus reflektierender Folie - auf dem Gehäuse oder in definierter Art und Weise mit der- oder demselben verbunden sein.

Die Empfangsoptik des Empfängers ist vorzugsweise um wenigstens eine feste Achse, im Allgemeinen eine auf die optische Achse der Empfangsoptik orthogonale, insbesondere vertikale Achse, rotierbar, d.h. sie kann sich in Richtung der Abtasteinheit ausrichten bzw. ausgerichtet werden. Der Winkel, um den sich die Empfangoptik dreht oder gedreht wird (der Rotationswinkel), wird dabei, vorzugsweise automatisch - z.B. durch einen Winkelsensor, bestimmt.

Ein Empfänger als Komponente des erfindungsgemässen Lagebestimmungssystems kann auch weitere Messfunktionalitäten aufweisen, die z.B. eine Verwendung als geodätisches Instrument erlauben oder aber in ein solches Gerät integriert sind. Beispielsweise kann der Empfänger zur handgehaltenen Vermessung im Baubereich verwendbar gestaltet werden, indem ein Laserentfernungsmesser integriert wird.

Das erfindungsgemässe Lagebestimmungsverfahren und das erfindungsgemässe Lagebestimmungssystem mit den Komponenten werden nachfolgend anhand von in den Zeichnungen schematisch dargestellten Ausführungsbeispielen rein beispielhaft näher beschrieben oder erläutert. Im Einzelnen zeigen
- Fig.1: die dem Lagebestimmungsverfahren zugrundeliegenden geometrischen Beziehungen;
- Fig.2: eine figürliche Darstellung von Ausführungsbeispielen der Systemkomponenten eines gattungsgemässen Lagebestimmungssystems;
- Fig.3: die schematische Erläuterung eines gattungsgemässen Lagebestimmungssystems;
- Fig.4: die schematische Erläuterung eines gattungsgemässen Lagebestimmungssystems mit bewegter Empfangseinrichtung;
- Fig.5: die schematische Erläuterung des erfindungsgemässen Lagebestimmungsverfahrens;
- Fig.6a-c: eine schematische Darstellung eines Ausführungsbeispiels für die Richtungsbestimmung der einfallenden Strahlung im Empfänger einer erfindungsgemässen Einheit und
- Fig.7a-d: eine schematische Darstellung der Steuerung eines Markierwagens unter Verwendung eines erfindungsgemässen Lagebestimmungsverfahrens.

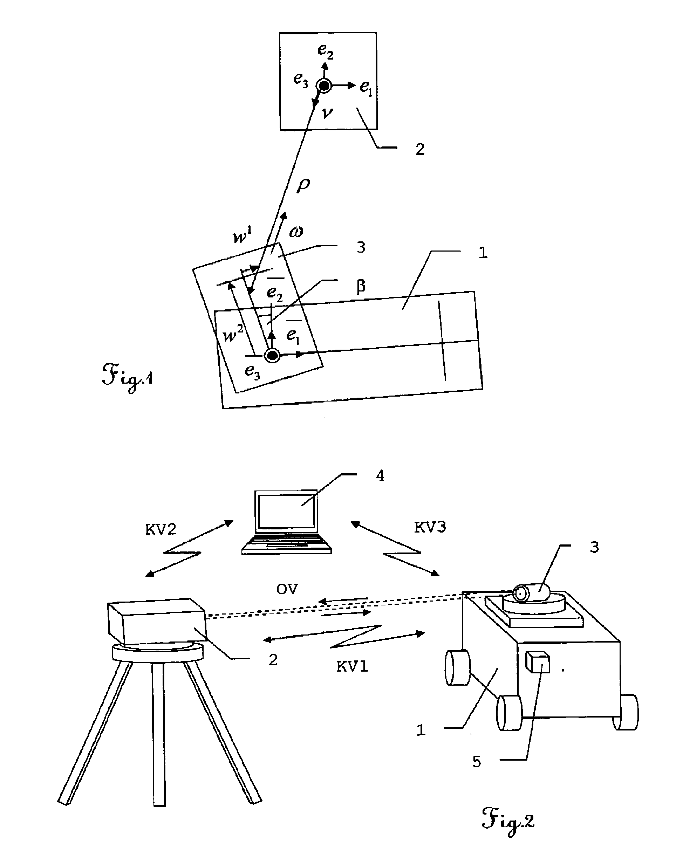

Fig.1 veranschaulicht die dem Lagebestimmungsverfahren zugrundeliegenden geometrischen Beziehungen. Auf einer Trägerkomponente 1 einer bewegbaren Einheit ist ein Empfänger 3 um eine körperfeste Achse drehbar montiert, wobei diese Achse orthogonal zur optischen Achse orientiert ist. Aus Anschaulichkeitsgründen erfolgt die Darstellung in einer Ebene und ohne Neigungen gegenüber der Horizontalen. Im Regelfall wird jedoch auch eine weitere Achse zur vertikalen Verstellung des Empfängers 3 realisiert. Durch die Abtasteinheit 2 wird ein Laserstrahl emittiert und ein Winkelbereich abgetastet, bis der Empfänger 3 erfaßt und dessen Distanz gemessen wird. Hierdurch werden sowohl Entfernung als auch Winkel zum Auftreff- oder Reflexpunkt am Empfänger 3 festgelegt und somit die Position des Empfängers 3 bestimmt. Durch den Empfänger 3 wird die Einfallsrichtung der Strahlung bestimmt, so dass die Orientierung bezüglich dieser Richtung und damit bezüglich der Abtasteinheit 2 ableitbar ist. Die beiden Systeme Abtasteinheit 2 und Empfänger 3 lassen sich mit den zwei körperfesten rechtshändigen Koordinatensystemen {*e*₁,*e*₂,*e*₃} und {*e̅*₁,*e̅*₂,*e̅*₃} beschreiben, wobei in der beispielhaft gezeigten Situation der jeweils dritte Einheitsvektor senkrecht zur Blattebene orientiert ist. Aufgrund der räumlichen Ausdehnung des Empfängers 3 und der Anordnung seiner Komponenten müssen bei der Modellierung jedoch einige Grössen berücksichtigt bzw. bestimmt werden.

Die Abtasteinheit 2 misst nun die Distanz p>0 und den ersten Richtungsvektor ν∈**R**³,∥ν∥=1 zu einem Auftreffpunkt am Empfänger 3. Der Empfänger misst den Rotationswinkel β gegenüber der Trägerkomponente 1 der bewegbaren Einheit, sowie den zweiten Richtungsvektor ω∈**R**³,∥ω∥=1 vom Auftreffpunkt zur Laserquelle in der Abtasteinheit 2. Erfindungsgemäss werden die Koordinaten *w*¹, *w*² und *w*³ des Verschiebungsvektors *w* gemessen bzw. sind, z.B. aus einer Kalibrierung oder der technischen Spezifikation, bekannt. Die in dieser Figur nicht dargestellte Komponente *w*³ steht senkrecht zur Blattebene. Aus der Kenntnis dieser Parameter kann die Lage eines ausgezeichneten Punktes der bewegbaren Einheit bzw. deren Trägerkomponente 1 unter Berücksichtigung der räumlichen Ausdehnung und Anordnung des Empfängers 3 bestimmt werden. Gleichermassen erlaubt die Kenntnis eine Steuerung von Empfänger 3 und Einheit so, dass dieser ausgezeichnete Punkt bezüglich des ersten Richtungsvektors ν als Strahlachse der emittierten Strahlung positioniert bzw. orientiert wird. Somit kann durch diese Steuerung ein die Strahlachse verfolgendes System realisiert werden.

Fig.2 zeigt eine figürliche Darstellung von Ausführungsbeispielen der Systemkomponenten eines gattungsgemässen Lagebestimmungssystems. Die bewegbare Einheit weist eine Trägerkomponente 1 und einen gegenüber dieser rotierbaren Empfänger 3 auf, wobei in den Empfänger 3 oder die Trägerkomponente 1 auch ein Neigungsmesser 5 integriert sein kann. Der Empfänger 3 oder einer seiner Bestandteile wird von der Abtasteinheit 2 erfasst und vermessen. Während des Verfahrensablaufs stehen Empfänger 3 und Abtasteinheit 2 über eine optische Verbindung OV in Kontakt. Über diese Verbindung OV erfolgt ständig die Positionsbestimmung des Empfängers 3 sowie dessen Orientierungsbestimmung relativ zur Verbindung OV und damit auch zur Abtasteinheit 2. Die Lageinformationen Entfernung, Richtung zum Empfänger 3 und Einfallsrichtung können entweder im Empfänger 3 oder in der Abtasteinheit 2 hinsichtlich der Positions- und Orientierungsbestimmung in einer integrierten Steuereinheit ausgewertet werden. Hierzu können die jeweils an der anderen Systemkomponente anfallenden Daten über eine Kommunikationsverbindung KV1 zwischen Empfänger 3 und Abtasteinheit 2 übertragen werden. Für bestimmte Anwendungen kann auch eine getrennte Steuereinheit 4 verwendet werden, so dass hierbei die jeweiligen Anteile der Lageinformationen über eine Kommunikationsverbindung KV2 zwischen Abtasteinheit 2 und Steuereinheit 4 sowie über eine Kommunikationsverbindung KV3 zwischen Empfänger 3 und Steuereinheit 4 übertragen werden. Durch die Steuereinheit 4 und die Kommunikationsverbindungen können dann wiederum Empfänger 3 und Abtasteinheit 2 gesteuert werden.

Unter Richtungen sind je nach vorhandenen Gegebenheiten und Zwangsbedingungen jeweils ein oder mehrere Winkel bzw. deren Bestimmung zu verstehen. In einer exakten Ebene, bspw. auf einem Sportfeld aus Kunststoffmaterial, werden die vorhandenen Freiheitsgrade durch die Zwangsbedingung einer Orientierung und Positionierung in dieser Ebene vorgegeben. Die zur Bestimmung von Position und Orientierung benötigte Zahl an Messgrössen wird somit reduziert. Wird beispielsweise ein Fahrzeug mit einer hinreichend grossen horizontalen Ausdehnung als Trägerkomponente 1 verwendet, so ist dieser stets horizontiert. Eine Neigungsmessung in zwei Achsen ist somit nicht nötig. Der Begriff Richtungsbestimmung beinhaltet je nach Umweltbedingungen die Messung der notwendigen Zahl von Grössen. Für ein Fahrzeug in der Ebene genügen dann Entfernung, Richtung zum Fahrzeug, d.h. der Polarwinkel, und Empfangsrichtung, d.h. ebenfalls der Polarwinkel der empfangenen Strahlung, um Position und Orientierung zu bestimmen. Darüber hinaus wird durch die Zwangsbedingungen auch die Orientierung des Empfängers 3 relativ zur Trägerkomponente 1 festgelegt. In obigem Beispiel genügt eine Bewegbarkeit des Empfängers 3 gegenüber der Trägerkomponente 1 um eine Stehachse, so dass auch hier ein Polarwinkel zur Definition von Position und Orientierung der Trägerkomponente 1 relativ zum Empfänger 3 ausreicht.

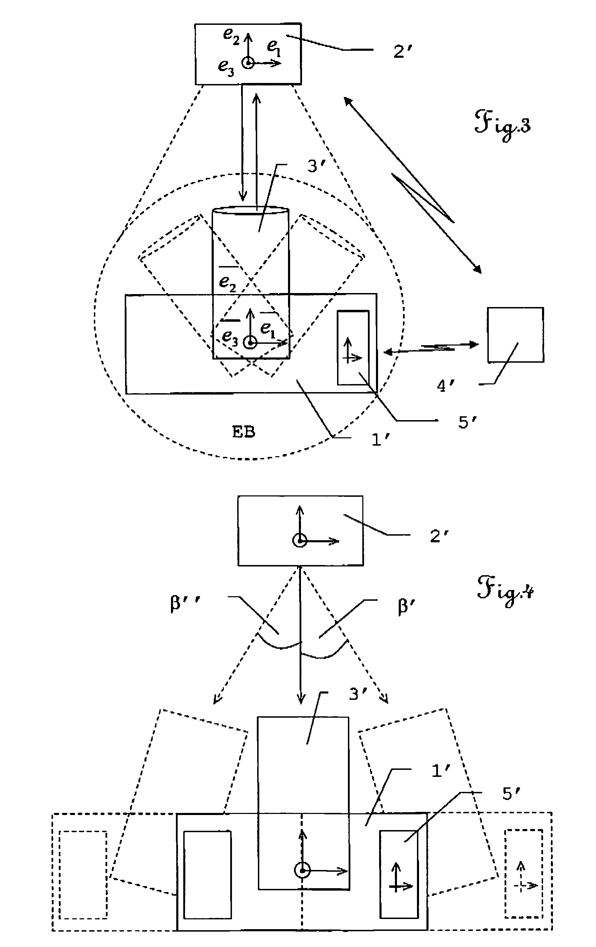

In Fig.3 wird ein gattungsgemässes Lagebestimmungssystem erläutert. Der Laser-Scanner in der Abtasteinheit 2' emittiert Strahlung, z.B. Laser-Pulse, und wird mit der nicht dargestellten Steuereinrichtung derart gesteuert, dass eine Ausrichtung des Scanners auf den Empfänger 3' erfolgt. Mit gestrichelten Linien ist ein Erfassungsbereich EB dargestellt, welcher vom Scanner abgetastet wird. Ein vom Scanner emittierter Laserstrahl trifft die mit einem für die emittierte Strahlung gut reflektierenden Belag beschichtete Objektivlinse des Empfängers 3' und auf eine nicht gezeigte Detektionseinrichtung des Laser-Scanners zurückgeworfen. Dem körperfesten Koordinatensystem {*e*₁,*e*₂,*e*₃} der Abtasteinheit 2' können bekannte lokale oder globale Koordinaten zugeordnet werden. Der Laser-Scanner ist derart in das Koordinatensystem einjustiert, dass der Drehpunkt des Lasers im Koordinatenursprung liegt. Von dieser Position bekannter Ortskoordinaten aus wird die Messung auf den Empfänger 3' durchgeführt. Der Scanner ist dabei um die Kipp- und Stehachse drehbar, wobei die Emissionsrichtung des emittierten Laserstrahls, z.B. anhand von Winkelsensoren, automatisch detektiert wird.

Die Trägerkomponente 1' weist einen rotierbaren Empfänger 3' und einen zweiachsigen Neigungssensor 5' auf. Der Ursprung des körperfesten Koordinatensystems {*e̅*₁,*e̅*₂,*e̅*₃} ist in den Drehpunkt des Empfängers 3' gelegt, welcher zumindest um die aus der Zeichenebene heraus zeigende Achse rotierbar ist. Durch die Messung auf die Empfangsoptik des Empfängers 3' wird dessen Koordinatensystem {*e̅*₁,*e̅*₂,*e̅*₃} mit demjenigen der Abtasteinheit 2' in Bezug gesetzt. Die Messung vom Laser-Scanner auf den Empfänger 3' erfolgt beispielsweise auf dessen Objektivlinse. Einerseits wird von der Objektivlinse ein Laserstrahl empfangen und Einfallsrichtung und -punkt desselben bestimmt, andererseits wird der Laserstrahl von der Objektivlinse zu einer nicht gezeigten Detektionseinrichtung des Scanners zurückreflektiert, welche den Abstand zwischen Abtasteinheit 2' und Empfänger 3' bestimmt. Aufgrund der bekannten Geometrie des Empfängers 3' ist damit auch der Abstand zur Trägerkomponente 1' bzw. zu jedem Punkt der bewegbaren Einheit bestimmt.

Der Rotationswinkel des drehbaren Empfängers 3' wird automatisch, z.B. mit Winkelsensoren, bestimmt bzw. zur Verfolgung des Leitstrahls aktiv eingerichtet. Selbstverständlich kann der Empfänger 3' auch derart ausgebildet sein, dass er um weitere Achsen dreh- oder kippbar ist. Die vom Empfänger 3' und der Abtasteinheit 2' gemessenen Werte können an eine externe Steuereinheit 4' übertragen werden.

Fig.4 zeigt die schematische Erläuterung eines gattungsgemässen Lagebestimmungssystems mit bewegter Empfangseinrichtung. Analog zur Beschreibung zu Fig.3 findet von der Abtasteinheit 2' aus eine Distanz- und Richtungsmessung zum Empfänger 3' statt. Die in der Mitte dargestellte Situation zeigt einen Emissionswinkel von 0°, der linke und rechte Strahl wird jeweils in einem gewissen Emissionswinkel β', β" zur 0°-Richtung emittiert. Wird nun nach der in Fig.3 dargestellten Erfassung und Vermessung des Empfängers 3' der Laserstrahl um den Winkel β' geschwenkt, so bewegt sich die Trägerkomponente 1' mit dem darauf angebrachten Empfänger 3' ebenfalls nach rechts, um die vorher bestehende Beziehung zwischen Empfängerachse und Laserstrahl aufrecht zu erhalten. Soll dabei die Distanz gleich gehalten werden, so erfolgt eine Bewegung auf einem Kreisbogen. Die hier gezeigte lineare Verschiebung nach rechts bedeutet eine mit zunehmender Verschiebung anwachsende Entfernung zwischen Abtasteinheit 2' und Empfänger 3'. Die gleichen Überlegungen gelten mutatis mutandis für die ebenfalls dargestellte Bewegung um den Winkel β" bzw. nach links. Je nach vorgegebenem Sollprofil bzw. zu durchfahrender Trajektorie werden auf der Basis der durch Abtasteinheit 2' und Empfänger 3' fortlaufend erzeugten Lageinformationen die notwendigen Steuerbefehle generiert. Durch die kontinuierliche Vermessung der Position des Empfängers 3' und dessen Anbindung an die Strahlrichtung der Emission kann eine Führung im Sinne eines "Reitens auf dem Leitstrahl" erreicht werden.

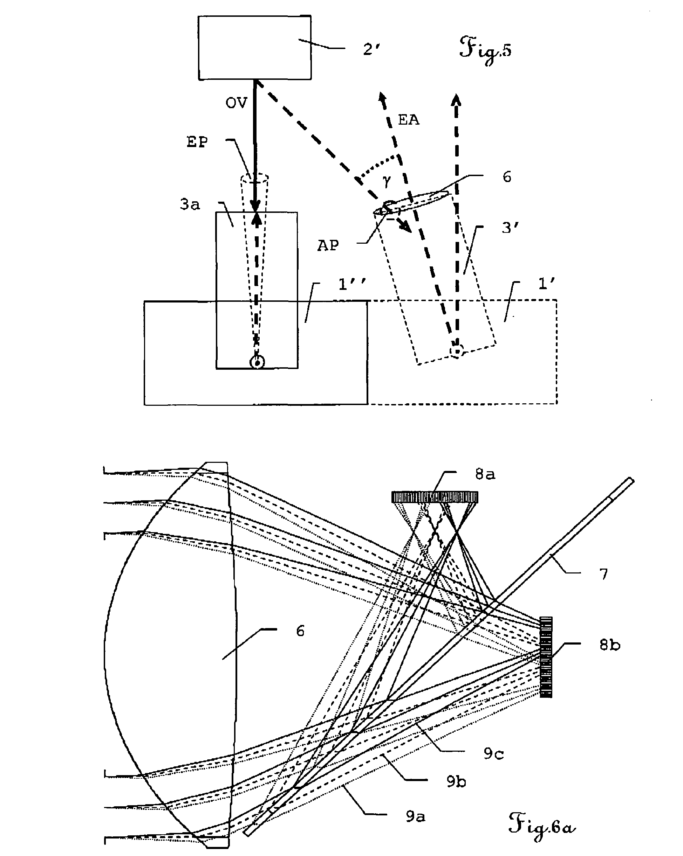

In Fig.5 wird das Prinzip des erfindungsgemässen Lagebestimmungsverfahrens im Vergleich zu einem System des Stands der Technik erläutert. Bei der Distanz- und Richtungsmessung von der Abtasteinheit 2' zum Empfänger 3a muss bei Systemen des Stands der Technik eine genaue Ausrichtung und Nachführung der optischen Verbindung OV erfolgen, die es ermöglicht, die Strahlachse stets in der kleinen Eintrittspupille EP des Empfängers 3a zu halten, was spezielle Anforderungen an die Nachführbewegung und die Richtungsstabilität beinhaltet. Durch die kleine Eintrittspupille EP wird ein Zur Empfängerachse im wesentlichen paralleler Einfall gewährleistet, so dass etwaige Fehler durch einen Strahlversatz und der räumlichen Ausdehnung des Empfängers 3a vernachlässigt werden können. Wird diese Ausrichtung jenseits eines Schwellenwertes verändert und die damit bewirkte Verbindung unterbrochen, so müssen Eintrittspupille EP und Strahlachse wieder neu zueinander orientiert bzw. aufeinander ausgerichtet werden um eine erneute optische Verbindung OV zu etablieren.

Bei einem erfindungsgemässen Empfänger 3' bzw. einem erfindungsgemässen Lagebestimmungssystem wird eine grössere Eintrittspupille bzw. optische Öffnung verwendet, so dass die optische Verbindung robust gegenüber Störungen wird und auch die Komponenten zur gegenseitigen Verfolgung Abtasteinheit 2' und Empfänger 3' einfacher gehalten werden können bzw. verringerten Anforderungen genügen können. Aufgrund der Dimensionierung ist es nun aber erforderlich, neben der Einfallsrichtung der Laserstrahlung, die hier in der Ebene durch den Einfallswinkel y beschrieben wird, auch den Ort oder Auftreffpunkt AP auf der Linse 6 bzw. den Strahlversatz als Versatz der einfallenden Strahlung gegenüber der Empfängerachse EA oder des Schwerpunktes im Strahlquerschnitt zur Empfängerachse EA zu bestimmen. Durch die Bestimmung bzw. Kenntnis dieser Grössen kann eine entsprechend großdimensionierte optische Öffnung realisiert werden.

Eine schematische Darstellung eines Ausführungsbeispiels für die Richtungsbestimmung der einfallenden Strahlung im Empfänger einer erfindungsgemässen Einheit erfolgt in den Fig.6a-c. In diesem Ausführungsbeispiel wird eine asphärische Linse 6 mit einer Apertur von 60 mm, einem Strahlteiler 7 und zwei ortssensitiven photoempfindlichen Detektorkomponenten 8a und 8b verwendet. Als geeignete Detektoren kommen beispielsweise Zeilenarrays, CCD- oder CMOS-Kameras oder Position Sensitive Devices (PSD) in Frage. In der Fig.6a entspricht die gestrichelte Linie 9b einem achsparallelen Strahleinfall, der zu einer Abbildung in der Mitte der Detektorenfläche führt. Ein mit durchgezogener Linie 9c angedeuteter Strahleinfall von unten führt zu einer Verschiebung der Abbildung in der Detektorfläche nach oben bzw. nach rechts. Ein mit gepunkteter Linie 9a dargestellter Strahleinfall von oben führt zu einer Verschiebung nach unten bzw. links.

Beide Detektorkomponenten 8a und 8b werden in diesem Ausführungsbeispiel in unterschiedlicher Richtung defokussiert. Beispielsweise befindet sich die Detektorkomponente 8a ausserhalb der Brennweite und die Detektorkomponente 8b innerhalb der Brennweite der Linse 6. Erfindungsgemäss kann durch diese Anordnung sowohl die Einfallsrichtung, als auch die Positionsverschiebung des Auftreffpunkts der Strahlung bzw. der Strahlversatz, d.h. die Koordinaten *w*¹, *w*³ des Verschiebungsvektors *w* in Fig.1, des einfallenden Strahls gemessen werden. Betrachtet man nur eine Koordinate auf den beiden Detektoren, so zeigt sich eine Änderung der Einfallsrichtung in einer Verschiebung des Bildpunkts auf beiden Detektorkomponenten 8a und 8b als Änderung der Summe der entsprechenden Detektorkoordinaten, wohingegen eine Positionsverschiebung des Strahls, d.h. ein Strahlversatz, sich in der Änderung der Differenz der Detektorkoordinaten zeigt. Die Verwendung der zwei entgegengesetzt defokussierten Detektorkomponenten 8a und 8b erlaubt somit die Bestimmung von Einfallsrichtung und Strahlversatz als Positionsverschiebung des Auftreffpunktes des Strahls und damit von vier Parametern.

Soll hingegen nur die Einfallsrichtung bestimmt werden, so genügt die Verwendung einer Detektorkomponente in der Fokusebene zur Bestimmung der Einfallsrichtung und damit von zwei Parametern. Durch eine solche Empfängeroptik bzw. Empfängerelektronik kann die Richtung der einfallenden Strahlung sowie eine Positionsablage einfach detektiert und gegebenenfalls die Empfängerachse nachgeführt werden.

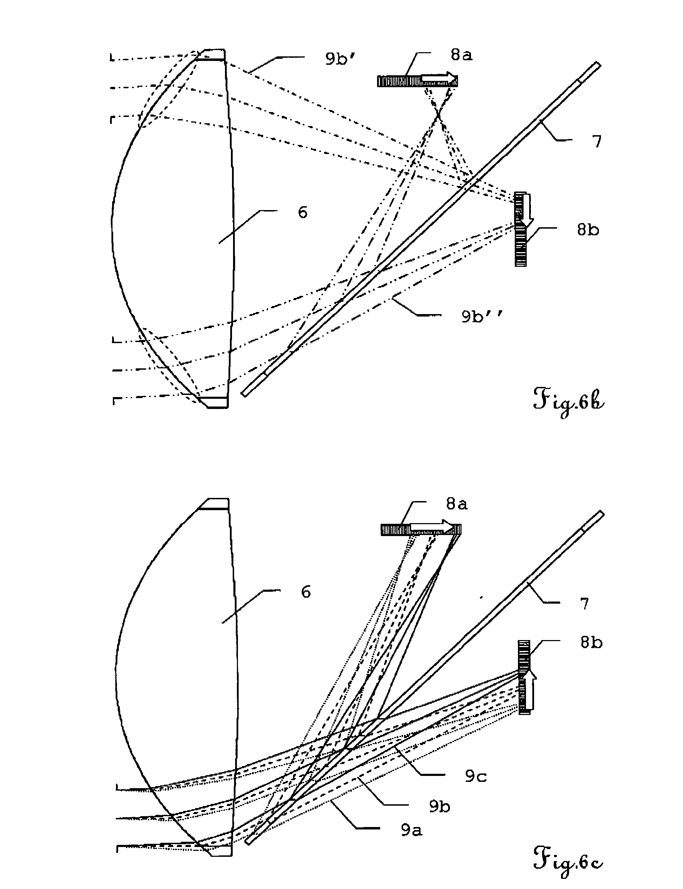

Die gleichzeitige Bestimmung von Strahlversatz und Einfallswinkel ist aus der Kenntnis der Lage der Bildpunkte auf den beiden Detektorkomponenten 8a und 8b möglich, wie nachfolgend in den Fig.6b und Fig.6c näher erläutert wird.

Fig.6b zeigt einen zweifachen Strahleinfall mit einem gegenüber der Empfängerachse unterschiedlichen Strahlversatz, aber gleichem Einfallswinkel. Ein durch mit Punkten unterbrochener Linie 9b' angedeuteter Strahleinfall im oberen Teil der Linse 6 führt auf der Detektorkomponente 8a zu einem mittig gelegenen Bildpunkt, wohingegen auf der Detektorkomponente 8b die Lage in der Nähe des oberen Rand ist. Der Strahleinfall mit durch zwei Punkte unterbrochener Linie 9b" im unteren Teil der Linse führt hingegen auf der Detektorkomponente 8a zu einem am rechten Rand gelegenen Bildpunkt, wohingegen auf der Detektorkomponente 8b der Bildpunkt mittig gelegen ist. Ein Strahlversatz als Versatz der einfallenden Strahlung gegenüber der Empfängerachse kann somit aus der Kenntnis der Lage beider Bildpunkte abgeleitet werden. Eine Verschiebung des Auftreffpunktes vom oberen Teil der Linse zum unteren Teil und die damit verbundene Veränderung des Strahlversatzes führen zu einer Verschiebung der Bildpunkte nach rechts bzw. nach unten.

Fig.6c zeigt hingegen einen dreifachen Strahleinfall mit einem konstanten Strahlversatz, aber unterschiedlichem Einfallswinkel, wobei wiederum die gestrichelte Linie 9b einen achsparallelen Strahleinfall, die durchgezogene Linie 9c einen Strahleinfall von unten und die gepunktete Linie 9a einen Strahleinfall von oben andeutet. Jedem Einfallswinkel ist wiederum eine charakteristische Kombination von Bildpunkten auf den beiden Detektorkomponenten 8a und 8b zugeordnet. Eine Veränderung des Einfallswinkels von schräg oben nach schräg unten führt zu einer Verschiebung des Bildpunktes auf der Detektorkomponente 8a nach rechts und auf der Detektorkomponente 8b nach oben. Im Vergleich zur Bewegung in Fig.6b erfolgt die Verschiebung somit gegenläufig statt im Uhrzeigersinn gleichgerichtet.

Aus der Kenntnis der Lagen der jeweiligen Bildpunkte auf den Detektorkomponenten 8a und 8b sowie deren Verschiebung können sowohl Strahlversatz und Einfallswinkel als auch deren Veränderung bestimmt werden.

Grundsätzlich sind auch alternative Ausführungsbeispiele für die Optik des Empfängers einer erfindungsgemässen Einheit realisierbar, z.B. unter Verwendung einer sphärischen Linse und entsprechend gekippten Detektoren, wobei auftretende Verzerrungen elektronisch berücksichtigt werden können.

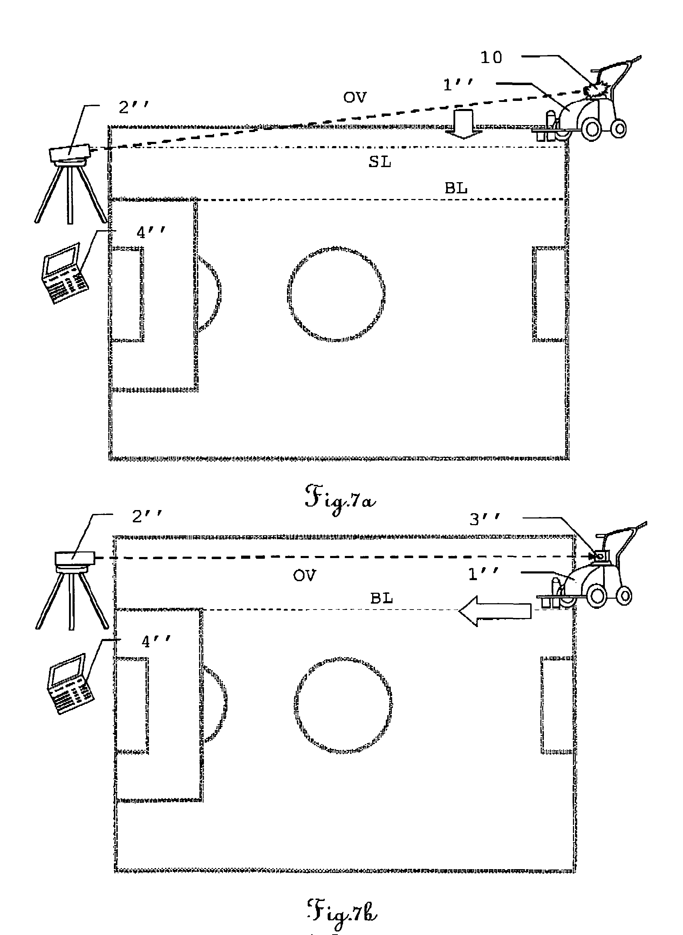

Fig.7a-d zeigen eine schematische Darstellung des Steuerung eines Markierwagens 1" als Trägerkomponente unter Verwendung eines erfindungsgemässen Lagebestimmungsverfahrens. Dargestellt wird eine Situation, bei der ein Sportfeld mit Markierungen versehen werden soll. In Fig.7a wird der Markierwagen 1" durch die suchende Bewegung der Abtasteinheit 2" anhand eines Reflexes 10 an der Empfangsoptik identifiziert und in Richtung und Entfernung vermessen. Dabei erfolgt die Vorgabe der zu markierenden Linie über eine von einem Bearbeiter zu bedienende, abgesetzt positionierte Steuereinheit 4". Der Markierwagen 1" ist über die optische Verbindung OV mit der Emission der Abtasteinheit 2" gekoppelt. Zur Markierung einer Bearbeitungslinie BL, die eine Seite des Strafraums festlegt, muss der Markierwagen 1" mit seiner Empfängerachse zu einer Sollinie SL geführt werden. Diese ist in diesem Beispiel nicht mit der Bearbeitungslinie BL deckungsgleich, da aufgrund des räumlichen Abstands zwischen Bearbeitungselementen und der Empfängerachse ein Versatz erforderlich ist, um die Markierung korrekt aufzubringen. Die Elektronik des Markierwagens 1" steuert diesen nun so, dass bei für die zu erreichende Position vorgegebener Distanz die Empfängerachse mit der Achse der emittierten Strahlung, d.h. der optischen Verbindung OV, zur Deckung gebracht oder innerhalb einer vorgegebenen Abweichung gehalten wird. Durch die Veränderung der optischen Verbindung OV kann somit der Markierwagen 1" mit der Empfängerachse auf die Sollinie SL geführt werden, so dass eine Aufbringung der Markierung möglich ist.

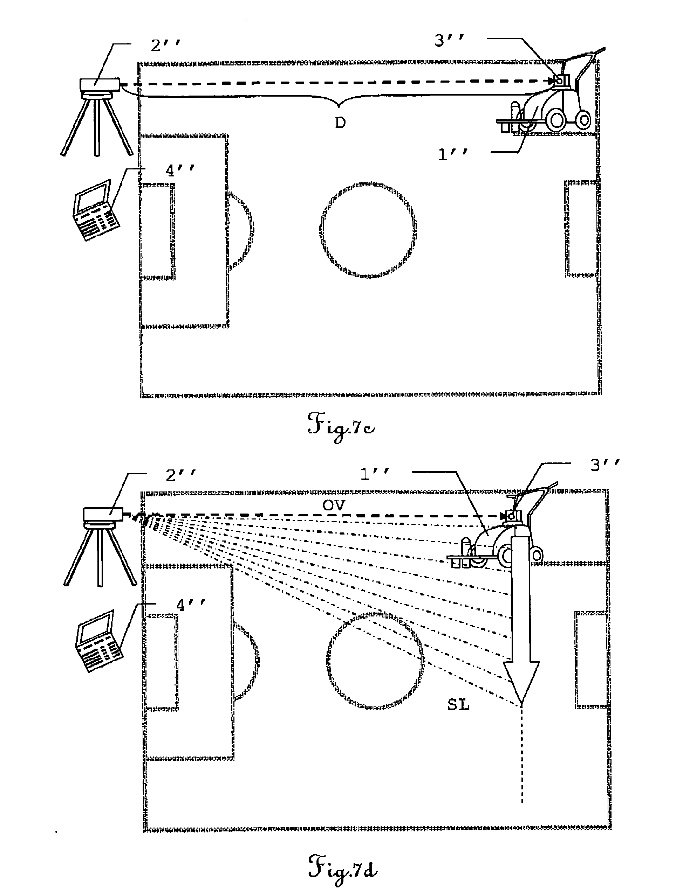

Die Übereinstimmung von optischer Verbindung OV, Empfängerachse und Sollinie SL ist in Fig.7b dargestellt. Der Empfänger 3" ist mit seiner Empfängerachse direkt auf die Strahlachse der Emission der Abtasteinheit 2" ausgerichtet. In diesem speziellen Fall bleibt die Ausrichtung der Empfängerachse gleich und der Markierwagen 1" bewegt sich, wie in Fig.7c dargestellt, zur Erzeugung der Markierung direkt auf die Abtasteinheit 2" zu, so dass sich nur die Entfernung D fortlaufend verringert. Andere räumliche Anordnungen bedingen eine parallele Änderung von Richtung des Empfängers 3" und der Entfernung D.

Ein solcher Fall ist in Fig.7d schematisch dargestellt. Nachdem der Markierwagen 1" die Strafraumseite markiert hat, soll dieser eine sich anschliessende und rechtwinklig dazu verlaufende Linie markieren. Dazu wird von der Abtasteinheit die Sollinie SL kontinuierlich verändert so dass der Markierwagen 1" dieser Veränderung folgt, indem er versucht, die optische Verbindung OV aufrecht zu erhalten. Zudem wird zur korrekten Aufbringung der Markierung auch die Stellung des Empfängers 3" relativ zum Markierwagen 1" berücksichtigt, da die Ausbringungseinheit als ausgezeichneter Punkt zu positionieren ist. Bei diesen geometrischen Bedingungen variieren sowohl der Winkel zwischen Empfänger 3" und Markierwagen 1" als auch die Entfernung kontinuierlich.

## Patentansprüche

1. Lagebestimmungsverfahren zur Bestimmung von Position und Orientierung, insbesondere in einer Ebene, einer bewegbaren Einheit mit einem Empfänger (3,3',3"), mittels
• einer Abtasteinheit (2,2',2") zum abtastenden Erfassen des Empfängers (3,3',3") durch einen Laserstrahl, wobei
o die Abtasteinheit (2,2',2") auf einem Punkt definierter Position positionierbar ist,
o der Empfänger (3,3',3") zum Empfang des Laserstrahles, mit einer Eintrittspupille ausgebildet und auf der Einheit anbringbar ist,
mit einem
- Erfassen des Empfängers (3,3',3") durch die Abtasteinheit (2,2',2"), wobei von der Abtasteinheit (2,2',2") wenigstens die Entfernung, insbesondere nach dem Phasen- oder Laufzeitmesserprinzip, und eine Richtung zum Empfänger (3,3',3") ermittelt werden,
- Erfassen des Laserstrahls durch den Empfänger (3,3',3") und Bestimmung einer Einfallsrichtung des Laserstrahls in Bezug auf eine Empfängerachse (EA),
- Bestimmen der Position und Orientierung der bewegbaren Einheit aus wenigstens der Entfernung, der Richtung zum Empfänger (3,3',3") und der Einfallsrichtung als Lageinformationen
**dadurch gekennzeichnet, dass**
die Eintrittspupille des Empfängers (3, 3',3"), relativ zum Querschnitt des Laserstrahls gross ist, so dass der Laserstrahl darin bewegt werden kann, und beim Erfassen des Laserstrahls die Lage des Auftreffpunktes (AP) des Laserstrahls in der Eintrittspupille des Empfängers (3,3',3") mittels eines einer Linse (6) nachgeordneten Strahlteilers (7) und zweier strahlungsempfindlicher und bezüglich des Laserstrahls positionssensitiver Detektorkomponenten (8a, 8b), die entgegengesetzt defokussiert angeordnet sind, bestimmt wird.

2. Lagebestimmungsverfahren nach Anspruch 1,
**dadurch gekennzeichnet, dass**
die Richtung zum Empfänger (3,3',3") mit einem horizontalen Empfängerwinkel und einem vertikalen Empfängerwinkel unter Berücksichtigung der Lage des Auftreffpunktes (AP) bestimmt wird.

3. Lagebestimmungsverfahren nach Anspruch 1 oder 2,
**dadurch gekennzeichnet, dass**
beim Bestimmen der Position die Lage des Auftreffpunktes (AP) berücksichtigt wird.

4. Lagebestimmungsverfahren nach einem der vorangehenden Ansprüche,
dadurch gennzeichnet, dass
für mehrere Werte der Lage des Auftreffpunktes (AP) und/oder der Einfallsrichtung eine Mittelwertbildung erfolgt.

5. Lagebestimmungsverfahren nach einem der vorangehenden Ansprüche,
**dadurch gekennzeichnet, dass**
beim Bestimmen der Position und Orientierung der Einheit eine Neigungsmessung erfolgt.

6. Lagebestimmungsverfahren nach einem der vorangehenden Ansprüche,
**dadurch gekennzeichnet, dass**
der Laserstrahl.mit einer Polarisationsrichtung emittiert und vom Empfänger die Polarisationsrichtung detektiert wird, so dass die Lage des Empfängers (3,3',3") relativ zur Polarisationsrichtung ableitbar ist.

7. Lagebestimmungsverfahren nach einem der vorangehenden Ansprüche,
**dadurch gekennzeichnet, dass**
eine Lageveränderung des Empfängers (3,3',3") und/oder der Einheit so gesteuert wird, dass eine, vorgegebene Ausrichtung relativ zur Einfallsrichtung eingenommen wird, insbesondere dass die Position und Orientierung der Einheit durch ein Verfolgen der Einfallsrichtung als Leitstrahl kontinuierlich verändert wird.

8. Lagebestimmungsverfahren nach einem der vorangehenden Ansprüche,
**gekennzeichnet durch**
eine Übertragung von wenigstens Teilen der Lageinformationen von
- der Abtasteinheit (2,2',2") an den Empfänger (3,3',3") und/oder die Einheit,
- dem Empfänger (3,3',3") und/oder der Einheit an die Abtasteinheit (2,2',2"),
- der Abtasteinheit (2,2',2") an eine Steuereinheit (4,4",4") und/oder
- dem Empfänger (3,3',3") und/oder der Einheit an die Steuereinheit (4,4',4"),
insbesondere über eine
o Funk-,
o Infrarot-,
o Ultraschall- oder
o Kabel-Verbindung.

9. Bewegbare Einheit zur Durchführung eines Lagebestimmungsverfahrens nach einem der vorangehenden Ansprüche, mit
- einer Trägerkomponente (1,1',1"), insbesondere mit einem Antrieb, und
- einem Empfänger (3,3',3") mit einer Eintrittspupille zum Empfang des Laserstrahls,
wobei
- der Empfänger (3,3',3") gegenüber der Trägerkomponente (1,1',1") verstellbar, insbesondere um ein oder zwei Achsen verdrehbar, angeordnet ist, und
- der Empfänger (3,3',3") und die Trägerkomponente (1,1',1") so ausgebildet und angeordnet sind, dass
o die Einfallsrichtung des Laserstrahls in Bezug auf eine Empfängerachse und
o die Stellung des Empfängers (3,3',3") relativ zur Trägerkomponente (1,1',1"), insbesondere durch wenigstens einen Winkelsensor,
detektierbar sind,
**dadurch gekennzeichnet, dass**
die Eintrittspupille des Empfängers (3, 3', 3"), relativ zum Querschnitt des Laserstrahls gross ist, so dass der Laserstrahl darin bewegbar ist, und der Empfänger (3,3',3") einer Linse (6) nachgeordneten Strahlteiler (1) und zwei strahlungsempfindliche und bezüglich des Laserstrahls positionssensitive Detektorkomponenten (8a, 8b) aufweist, die entgegengesetzt defokussiert angeordnet sind, und mittels derer die Lage des Auftreffpunktes (AP) des Laserstrahls in der Eintrittspupille des Empfängers (3,3',3") bestimmbar ist.

10. Bewegbare Einheit nach Anspruch 9,
**dadurch gekennzeichnet, dass**
der Empfänger (3,3',3") so ausgebildet ist, dass die Lage des Auftreffpunkts (AP) gemeinsam mit einem Einfallswinkel des Laserstrahls detektiert wird.

11. Bewegbare Einheit nach einem der Ansprüche 9 und 10,
**gekennzeichnet durch**
einen Neigungsmesser (5,5'), insbesondere einen biaxialen Neigungsmesser.

12. Bewegbare Einheit nach einem der Ansprüche 9 bis 11,
**gekennzeichnet durch**
ein den Laserstrahl reflektierendes Element, insbesondere einen reflektierend ausgebildeten Bereich des Empfängers (3,3',3"), vorzugsweise einen reflektierend ausgebildeten Bereich einer Empfängeroptik.

13. Bewegbare Kinheit nach einem der Ansprüche 9 bis 12,
**dadurch gekennzeichnet, dass**
der Empfänger (3,3',3") polarisationssensitiv ausgebildet ist, so dass die Lage des Empfängers (3,3',3") relativ zur Polarisationsrichtung ableitbar ist.

14. Bewegbare Einheit nach einem der Ansprüche 9 bis 13,
**gekennzeichnet durch**
eine Bearbeitungseinheit zur Veränderung einer Oberfläche, insbesondere zur Erzeugung bodengebundener Markierungen.

15. Lagebestimmungssystem zur Durchführung eines Lagebestimmungsverfahrens nach einem der Ansprüche 1 bis 8, mit einer bewegbaren Einheit nach einem der Ansprüche 9 bis 14 und einer Abtasteinheit (2,2',2") mit
- einer Strahlungsquelle zur Emission eines Laserstrahls,
- einer Steuerkomponente zum Führen des Laserstrahls in einer Abtastbewegung über einen Raumwinkelbereich,
- einer Messkomponente zum Empfangen des reflektierten Laserstrahls und Bestimmen von Richtung und Entfernung zu einem Reflexionsort des Laserstrahls, insbesondere nach dem Laufzeit- oder Phasenmessprinzip, und
- Kommunikationsmitteln zur Übertragung von Richtung und Entfernung,
wobei die Steuerkomponente so ausgebildet ist, dass die Abtastbewegung frei vorgebbar ist.

16. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 8 ein Verbindung mit einem Lagebestimmungssystem Anspruch 15 wenn das Programm in einem Computer ausgefuhrt wird.

## Claims

1. Location determination method for determining position and orientation, in particular in a plane, of a movable unit having a receiver (3, 3', 3"), by means of
- a scanning unit (2, 2', 2") for scanning registration of the receiver (3, 3', 3") by a laser beam,
- the scanning unit (2, 2', 2") being positionable at a point of defined position,
- the receiver (3, 3', 3") for receiving the laser beam being implemented having an entry pupil and being attachable to the unit,
having a
- registration of the receiver (3, 3', 3") by the scanning unit (2, 2', 2"), at least the distance, in particular according to the phase or runtime meter principle, and a direction toward the receiver (3, 3', 3") being ascertained by the scanning unit (2, 2', 2"),
- registration of the laser beam by the receiver (3, 3', 3") and determination of a direction of arrival of the laser beam in relation to a receiver axis (EA),
- determination of the position and orientation of the movable unit from at least the distance, the direction toward the receiver (3, 3', 3"), and the direction of arrival as location information
**characterized in that** the entry pupil of the receiver (3, 3', 3") is large in relation to the cross-section of the laser beam, so that the laser beam can be moved therein, and upon the registration of the laser beam, the location of the incidence point (AP) of the laser beam in the entry pupil of the receiver (3, 3', 3") is determined by means of a beam splitter (7) arranged downstream from a lens (6) and two radiation-sensitive detector components (8a, 8b), which are position-sensitive with respect to the laser beam and are arranged defocused in opposite directions.

2. Location determination method according to Claim 1, **characterized in that** the direction toward the receiver (3, 3', 3") is determined with a horizontal receiver angle and a vertical receiver angle in consideration of the location of the incidence point (AP).

3. Location determination method according to Claim 1 or 2,
**characterized in that** the location of the incidence point (AP) is considered when determining the position.

4. Location determination method according to any one of the preceding claims,
**characterized in that** a mean value calculation is performed for multiple values of the location of the incidence point (AP) and/or the direction of arrival.

5. Location determination method according to any one of the preceding claims,
**characterized in that** an inclination measurement is performed during the determination of the position and orientation of the unit.

6. Location determination method according to any one of the preceding claims,
**characterized in that** the laser beam is emitted with a polarization direction and the polarization direction is detected by the receiver, so that the location of the receiver (3, 3', 3") relative to the polarization direction can be derived.

7. Location determination method according to any one of the preceding claims,
**characterized in that** a location change of the receiver (3, 3', 3") and/or the unit is controlled so that a predefined alignment relative to the direction of arrival is assumed, in particular, **in that** the position and orientation of the unit is continuously changed by tracking of the direction of arrival as a guide beam.

8. Location determination method according to any one of the preceding claims,
**characterized by** a transmission of at least parts of the location information from
- the scanning unit (2, 2', 2") to the receiver (3, 3', 3") and/or the unit,
- the receiver (3, 3', 3") and/or the unit to the scanning unit (2, 2', 2"),
- the scanning unit (2, 2', 2") to a control unit (4, 4', 4") and/or
- the receiver (3, 3', 3") and/or the unit to the control unit (4, 4', 4"),
in particular via a
- radio,
- infrared,
- ultrasound or
- cable connection.

9. Movable unit for carrying out a location determination method according to any one of the preceding claims, having
- a carrier component (1, 1', 1"), in particular having a drive, and
- a receiver (3, 3', 3") having an entry pupil for receiving the laser beam,
- the receiver (3, 3', 3") being arranged so it is displaceable, in particular rotatable around one or two axes, in relation to the carrier component (1, 1', 1"), and
- the receiver (3, 3', 3") and the carrier component (1, 1', 1") being implemented and arranged so that
- the direction of arrival of the laser beam in relation to a receiver axis and
- the position of the receiver (3, 3', 3") relative to the carrier component (1, 1', 1") are detectable, in particular by at least one angle sensor,
**characterized in that** the entry pupil of the receiver (3, 3', 3") is large relative to the cross-section of the laser beam, so that the laser beam is movable therein, and the receiver (3, 3', 3") has a beam splitter (7) arranged downstream from a lens (6) and two radiation-sensitive detector components (8a, 8b), which are position-sensitive with respect to the laser beam and are arranged defocused in opposite directions, and by means of which the location of the incidence point (AP) of the laser beam in the entry pupil of the receiver (3, 3', 3") can be determined.

10. Movable unit according to Claim 9,
**characterized in that** the receiver (3, 3', 3") is implemented so that the location of the incidence point (AP) is detected jointly with an angle of arrival of the laser beam.

11. Movable unit according to any one of Claims 9 and 10,
**characterized by** an inclinometer (5, 5'), in particular a biaxial inclinometer.

12. Movable unit according to any one of Claims 9 to 11,
**characterized by** an element that reflects the laser beam, in particular a reflectively implemented region of the receiver (3, 3', 3"), preferably a reflectively implemented region of a receiver optic.

13. Movable unit according to any one of Claims 9 to 12,
**characterized in that** the receiver (3, 3', 3") is implemented as polarization-sensitive, so that the location of the receiver (3, 3', 3") relative to the polarization direction can be derived.

14. Movable unit according to any one of Claims 9 to 13,
**characterized by** a processing unit for changing a surface, in particular for generating ground-based markings.

15. Location determination system for carrying out a location determination method according to any one of Claims 1 to 8, having a movable unit according to any one of Claims 9 to 14 and a scanning unit (2, 2', 2") having
- a beam source for emission of a laser beam,
- a control component for guiding the laser beam in a scanning movement over a spatial angle range,
- a measuring component for reception of the reflected laser beam and determination of the direction and distance to a reflection location of the laser beam, in particular according to the runtime or phase measuring principle, and
- communication means for transmission of direction and distance,
the control component being implemented so that the scanning movement is freely pre-definable.

16. Computer program product having program code which is stored on a machine-readable carrier or is embodied by an electromagnetic shaft, for carrying out the method according to any one of Claims 1 to 8, in conjunction with a location determination system according to Claim 15, when the program is executed on a computer.

## Revendications

1. Procédé de détermination de position pour la détermination de la position et de l'orientation, en particulier dans un plan, d'une unité mobile avec un récepteur (3, 3', 3") au moyen
• d'une unité de balayage (2, 2', 2") pour la détection par balayage du récepteur (3, 3', 3") par un faisceau laser,
o l'unité de balayage (2, 2', 2") pouvant être positionnée sur un point de position définie,
o le récepteur (3, 3', 3") étant configuré pour la réception du faisceau laser avec une pupille d'entrée et pouvant être fixé sur l'unité
avec une
- détection du récepteur (3, 3', 3") par l'unité de balayage (2, 2', 2"), cependant qu'au moins la distance, en particulier selon le principe de l'indicateur de phase ou du dispositif du délai de parcours, et une direction vers le récepteur (3, 3', 3") sont détectées par l'unité de balayage (2, 2', 2"),
- détection du faisceau laser par le récepteur (3, 3', 3") et détermination d'une direction d'incidence du faisceau laser par rapport à un axe de récepteur (EA),
- détermination de la position et de l'orientation de l'unité mobile à partir d'au moins la distance, de la direction vers le récepteur (3, 3', 3") et de la direction d'incidence comme informations de position
**caractérisé en ce**
**que** la pupille d'entrée du récepteur (3, 3', 3") est grande par rapport à la section du faisceau laser si bien que le faisceau laser peut y être déplacé et que, lors de la détection du faisceau laser, la position du point d'impact (AP) du faisceau laser dans la pupille d'entrée du récepteur (3, 3', 3") est déterminée au moyen d'un séparateur de faisceau (7) placé en aval d'une lentille (6) et de deux composants de détecteur (8a, 8b), sensibles au rayonnement et sensibles à la position par rapport au faisceau laser, qui sont placés défocalisés en sens inverse.

2. Procédé de détermination de position selon la revendication 1,
**caractérisé en ce**
**que** la direction vers le récepteur (3, 3', 3") est déterminée avec un angle de récepteur horizontal et un angle de récepteur vertical en tenant compte de la position du point d'impact (AP).

3. Procédé de détermination de position selon la revendication 1 ou 2,
**caractérisé en ce**
**que** la position du point d'incidence (AP) est prise en compte lors de la détermination de la position.

4. Procédé de détermination de position selon l'une des revendications précédentes,
**caractérisé en ce**
**qu'**une formation de moyenne est effectuée pour plusieurs valeurs de la position du point d'incidence (AP) et/ou de la direction d'incidence.

5. Procédé de détermination de position selon l'une des revendications précédentes,
**caractérisé en ce**
**qu'**une mesure de l'inclinaison est effectuée lors de la détermination de la position et de l'orientation de l'unité.

6. Procédé de détermination de position selon l'une des revendications précédentes,
**caractérisé en ce**
**que** le faisceau laser est émis avec une direction de polarisation et que la direction de polarisation est détectée par le récepteur si bien que la position du récepteur (3, 3', 3") peut être dérivée par rapport à la direction de polarisation.

7. Procédé de détermination de position selon l'une des revendications précédentes,
**caractérisé en ce**
**qu'**une modification de la position du récepteur (3, 3', 3") et/ou de l'unité est commandée de telle manière qu'une orientation prédéfinie est prise par rapport à la direction d'incidence, en particulier que la position et l'orientation de l'unité est modifiée en continu par un suivi de la direction d'incidence en tant que faisceau directeur.

8. Procédé de détermination de position selon l'une des revendications précédentes,
**caractérisé par**
une transmission d'au moins de parties des informations de position
- de l'unité de balayage (2, 2', 2") au récepteur (3, 3', 3") et/ou à l'unité,
- du récepteur (3, 3', 3") et/ou de l'unité à l'unité de balayage (2, 2', 2"),
- de l'unité de balayage (2, 2', 2") à une unité de commande (4, 4', 4") et/ou
- du récepteur (3, 3', 3") et/ou de l'unité à l'unité de commande (4, 4', 4"), en particulier par une
o connexion par radio,
o par infrarouge,
o par ultrasons ou
o par câble.

9. Unité mobile pour exécuter un procédé de détermination de la position selon l'une des revendications précédentes avec
- une composante porteuse (1, 1', 1"), en particulier avec un entraînement et
- un récepteur (3, 3', 3") avec une pupille d'entrée pour la réception du faisceau laser,
cependant que
- le récepteur (3, 3', 3") est réglable par rapport à la composante porteuse (1, 1', 1"), en particulier qu'il est placé rotatif autour d'un ou de deux axes et
- le récepteur (3, 3', 3") et la composante porteuse (1, 1', 1") sont configurés et placés de telle manière que
o la direction d'incidence du faisceau laser peut être détectée par rapport à un axe récepteur et
o la position du récepteur (3, 3', 3") peut être détectée par rapport à la composante porteuse (1, 1', 1"), en particulier par au moins un détecteur d'angle,
**caractérisée en ce**
**que** la pupille d'entrée du récepteur (3, 3', 3") est grande par rapport à la section du faisceau laser si bien que le faisceau laser y est mobile et le récepteur (3, 3', 3") présente un séparateur de faisceaux placé en aval par rapport à une lentille (6) et deux composants de détecteur (8a, 8b) sensibles au rayonnement et sensibles à la position du faisceau laser qui sont placés défocalisés en sens opposé et au moyen desquels la position du point d'incidence (AP) du faisceau laser peut être déterminée dans la pupille d'entrée du récepteur (3, 3', 3").
